# EUROPÄISCHE PATENTSCHRIFT

(11) **EP 2 632 704 B1**
(45) Veröffentlichungstag und Bekanntmachung des Hinweises auf die Patenterteilung: **10.02.2016**
(21) Anmeldenummer: 11776366.4
(22) Anmeldetag: 27.10.2011
(51) Int. Cl.: B30B 1/26, B30B 15/10, B30B 15/12

(54) **MECHANISCHE UMFORMMASCHINE, INSBESONDERE KURBELPRESSE SOWIE VERFAHREN ZUR BEREITSTELLUNG EINER MECHANISCHEN UMFORMMASCHINE**
MECHANICAL METAL-FORMING MACHINE, IN PARTICULAR A CRANK PRESS, AND METHOD FOR PROVIDING A MECHANICAL METAL-FORMING MACHINE
MACHINE DE FORMAGE MÉCANIQUE, EN PARTICULIER PRESSE À VILEBREQUIN, AINSI QUE PROCÉDÉ DE RÉALISATION D'UNE MACHINE DE FORMAGE MÉCANIQUE

(30) Priorität: 27.10.2010 DE 102010049492
(43) Veröffentlichungstag der Anmeldung: 04.09.2013
(73) Patentinhaber: Schuler Pressen GmbH, 73033 Göppingen (DE)
(72) Erfinder: LOCHER, Martin, 88281 Schlier (DE); GASSER, Reinhold, 88377 Riedhausen (DE)
(74) Vertreter: Otten, Roth, Dobler & Partner mbB Patentanwälte
(86) Internationale Anmeldenummer: PCT/EP2011/005416
(87) Internationale Veröffentlichungsnummer: WO 2012/055558

(56) Entgegenhaltungen:
- EP-A1- 1 640 145
- EP-A1- 2 006 080
- EP-A2- 1 126 581
- EP-A2- 2 199 072
- WO-A1-2008/149171
- WO-A1-2010/063329
- DE-A1-102008 064 229
- DE-C- 629 792
- DE-U1-202006 013 502

## Beschreibung

Die Erfindung betrifft eine mechanische Umformmaschine, insbesondere Kurbelpresse gemäß dem Oberbegriff des Anspruchs 1 sowie ein Verfahren zur Bereitstellung einer mechanischen Umformmaschine entsprechend dem Anspruch 7.

Aus der EP_1 126 581_A2 ist eine elektrische Antriebsvorrichtung, insbesondere für Pressenanlagen und/oder deren Bestandteile bekannt. Diese umfasst einen Haupt-Elektromotor zum Antreiben eines Schwungrades, welches über eine lösbare Kupplungseinrichtung eine Antriebswelle antreibt, und einen Zusatz-Elektromotor, der zusätzlich zum Antrieb der Antriebswelle nutzbar ist, wobei der Haupt-Elektromotor und der Zusatz-Elektromotor innerhalb des Schwungrades angeordnet sind.

Aus der DE_20 2006 013 502_U1 ist ein Antriebssystem für eine Umformmaschine bekannt, welches eine von einem Antrieb getriebene Exzenterwelle mit einem Betätigungselement sowie ein mit dem Antrieb verbindbares Schwungrad umfasst, wobei das Schwungrad über einen Freilauf mit dem Antrieb verbindbar ist.

Aus der DE 10 2008 064 229 A1 ist eine mechanische Umformmaschine bekannt, welche eine Antriebswelle, einen Hauptantrieb, einen Nebenantrieb, ein Schwungrad und eine Kupplung umfasst, wobei der Hauptantrieb das Schwungrad zeitweise antreibt, wobei das Schwungrad hierzu über die Kupplung mit der Antriebswelle gekuppelt ist und wobei der Nebenantrieb als Servomotor ausgebildet ist und die Antriebswelle antreibt.

Aus der WO_2010/063329_A1 ist ein Produktionssystem bekannt, bei welchem ein Schwungrad über einen Kupplung und eine Hauptwelle auf ein Zahnrad wirkt und bei welcher ein Servo-Motor auf das Zahnrad wirkt.

In der EP_2 006 080_A1 ist schließlich mechanische Presse offenbart, bei welcher ein Schwungrad und eine Hilfsmotor auf eine rotierende Welle wirken.

Es ist Aufgabe der Erfindung, eine mechanische Umformmaschine, insbesondere Kurbelpresse vorzuschlagen, welche energieeffizient arbeitet und bei welcher die Antriebskomponenten raumsparend angeordnet sind und hierdurch insbesondere eine Umrüstung bzw. Nachrüstung einer vorhandenen Umformmaschine mit geringem Umbauaufwand und Kostenaufwand ermöglichen. Weiterhin ist es Aufgabe der Erfindung ein Verfahren vorzuschlagen, durch welches eine bestehende Umformmaschine umrüstbar ist, um die Vorteile einer erfindungsgemäßen Umformmaschine aufzuweisen.

Diese Aufgabe wird ausgehend von den Merkmalen des Oberbegriffs des Anspruchs 1 bzw. des Anspruchs 7 durch die kennzeichnenden Merkmale der Ansprüche 1 bzw. 7 gelöst. In den Unteransprüchen sind vorteilhafte und zweckmäßige Weiterbildungen angegeben.

Die erfindungsgemäße mechanische Umformmaschine, insbesondere Kurbelpresse, umfasst eine Antriebswelle, einen Schwungradantrieb mit einem Schwungrad, einen Nebenantrieb sowie eine Kupplung, wobei der Schwungradantrieb die Umformmaschine zumindest zeitweise antreibt, wobei das Schwungrad hierzu über die Kupplung mit der Antriebswelle gekuppelt ist und wobei der Nebenantrieb als Servomotor ausgebildet ist und die Antriebswelle antreibt. Die Erfindung ist dadurch gekennzeichnet, dass ein Rotor des Nebenantriebs drehfest permanent mit der Antriebswelle verbunden ist und dass das Schwungrad mittels der Kupplung an den Rotor des Nebenantriebs gekuppelt ist, um über diesen die Antriebswelle anzutreiben.

Das Übertragen der Rotationsenergie des Schwungrads über einen Einkuppelvorgang auf den Rotor eines Nebenantriebs, welcher wiederum fest mit der Antriebswelle der Umformmaschine verbunden ist, erspart eine separate Kupplungsvorrichtung für die beiden nebeneinander existierenden Antriebsmöglichkeiten durch das Schwungrad und/oder durch den Nebenantrieb. Exemplarisch könnte die Betrachtung so erfolgen, dass der Nebenantrieb zwischen das Schwungrad und die Antriebswelle eingeschaltet wird, und zeitweise über seinen Rotor die Kraftübertragung übernimmt.

In einer vorteilhaften Weiterbildung der erfindungsgemäßen Umformmaschine ist der Schwungradantrieb sowie der Nebenantrieb am selben Ende der Antriebswelle angeordnet. Auf diese Weise wird eine kompakte Antriebsbaugruppe gebildet, welche beispielsweise zu Wartungs- und Erneuerungszwecken einfach zugänglich ist.

In einer weiteren zweckmäßigen Ausgestaltung der Erfindung ist vorgesehen, dass der Nebenantrieb entweder als Stator mit innenlaufendem Rotor oder als Stator mit außenlaufendem Rotor ausgebildet sein kann. Entsprechend den jeweiligen konstruktiven Anforderungen können entsprechende Variationsmöglichkeiten vorteilhafte Ankupplungen an die Antriebswelle bereitstellen.

In einer weiteren zweckmäßigen Ausgestaltung der erfindungsgemäßen Umformmaschine ist vorgesehen, dass die Kupplung mindestens einen Betätigungszylinder umfasst, wobei der mindestens eine Betätigungszylinder gegenüber dem Schwungrad still steht. Durch die ruhende Anordnung des Betätigungszylinders für die Kupplung, wobei üblicherweise mehrere Betätigungszylinder realisiert sind, wird erreicht, dass auf eine komplizierte und anfällige Dreheinführung verzichtet werden kann.

In einer weiteren zweckmäßigen Ausgestaltung der erfindungsgemäßen Umformmaschine ist vorgesehen, dass eine Bremsvorrichtung, insbesondere eine hydraulische Trommelbremse radial von der Antriebswelle ausgehend von innen an einen, den Rotor tragenden Rotorträger angreift. Eine derartige Anordnung einer Bremsvorrichtung ermöglicht eine kompakte und modulare Bauweise, welche sich vorteilhaft in die Antriebsbaugruppe integrieren lässt.

Durch Verwendung einer entsprechenden Antriebsbaugruppe, welche aus einer Kupplungseinheit, einem Direktantrieb - Nebenantrieb - als Servomotor und einer Bremsvorrichtung gebildet wird, besteht die Möglichkeit, existierende Umformmaschinen mit Schwungradantrieb umzurüsten, um auf diese Weise die Vorteile einer Kombination aus Schwungradantrieb und Direktantrieb nutzbar zu machen. Die entsprechenden Vorteile bestehen unter anderem darin, dass die Stößelbewegung nicht ausschließlich durch eine Schwungradbewegung bestimmt wird, sondern eine unabhängig von der Drehzahl des Schwungrads wählbare Verweildauer im oberen Todpunkt oder Bewegungsrampen des Stößels durch den Direktantrieb anfahrbar sind.

Die Erfindung betrifft weiterhin ein Verfahren zur Bereitstellung einer mechanischen Umformmaschine, welches die Umrüstung einer bestehenden Umformmaschine durch Montage einer Antriebsbaugruppe beschreibt.

Die Eckdaten der Erfindung sollen anhand der folgenden Ausführungsbeispiele näher erläutert werden.

Es zeigen dabei
- Figur 1: eine schematische Schnittdarstellung des oberen Halbraums eines entsprechenden Antriebsbereichs einer Umformmaschine,
- Figur 2: eine Schnittdarstellung einer Umformmaschine mit angeordnetem Antrieb,
- Figur 3: eine Detailansicht der Umformmaschine nach Figur 2.

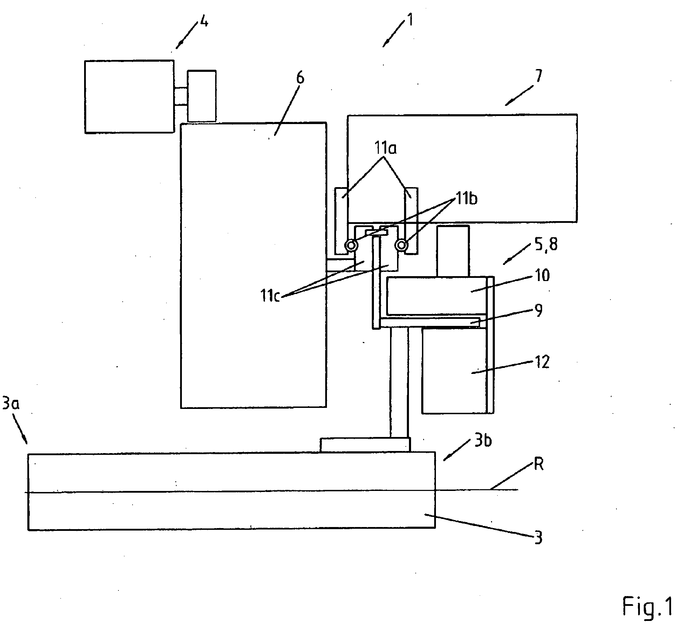

Im Einzelnen zeigt Figur 1 einen Ausschnitt des oberen Halbraums oberhalb der Rotationsachse R einer Antriebsanordnung für eine mechanische Umformmaschine 1. Die Umformmaschine 1 umfasst dabei eine Antriebswelle 3, ein Schwungrad 6 mit einem Schwungradantrieb 4, einen Nebenantrieb 5 sowie eine Kupplung 7. Der Nebenantrieb 5 ist dabei als Servomotor 8 ausgebildet, welcher einen Rotor 9 und einen Stator 10 umfasst. Der Rotor 9 ist dabei permanent drehfest mit der Antriebswelle 3 verbunden. Der Rotor 9 umfasst des Weitern eine Friktionsscheibe 9a, welche über die Kupplung 7 und daran angeordnete Druckscheiben 11a, Drucklager 11b und Reibscheiben 11c mit dem Schwungrad 6 verbindbar ist. Auf diese Weise wird das Schwungrad 6 mittels der Kupplung 7 an den Rotor 9 des Nebenantriebs 5 gekuppelt, um über diesen die Antriebswelle 3 anzutreiben.

Radial innen liegend zwischen der Rotationsachse R der Antriebswelle 3 und dem Rotor 9 liegt eine Bremsvorrichtung 12, welche vorliegend nur schematisch dargestellt ist. Die Antriebswelle 3 weist ein erstes Ende 3a und ein zweites Ende 3b auf. Der Schwungradantrieb 4 und der Nebenantrieb 5 sind an demselben Ende 3b der Antriebswelle 3 angeordnet. Anders ausgedrückt wirken der Schwungradantrieb 4 und der Nebenantrieb 5 über den Rotor 9 des Nebenantriebs 5 auf dasselbe Ende 3b der Antriebswelle 3.

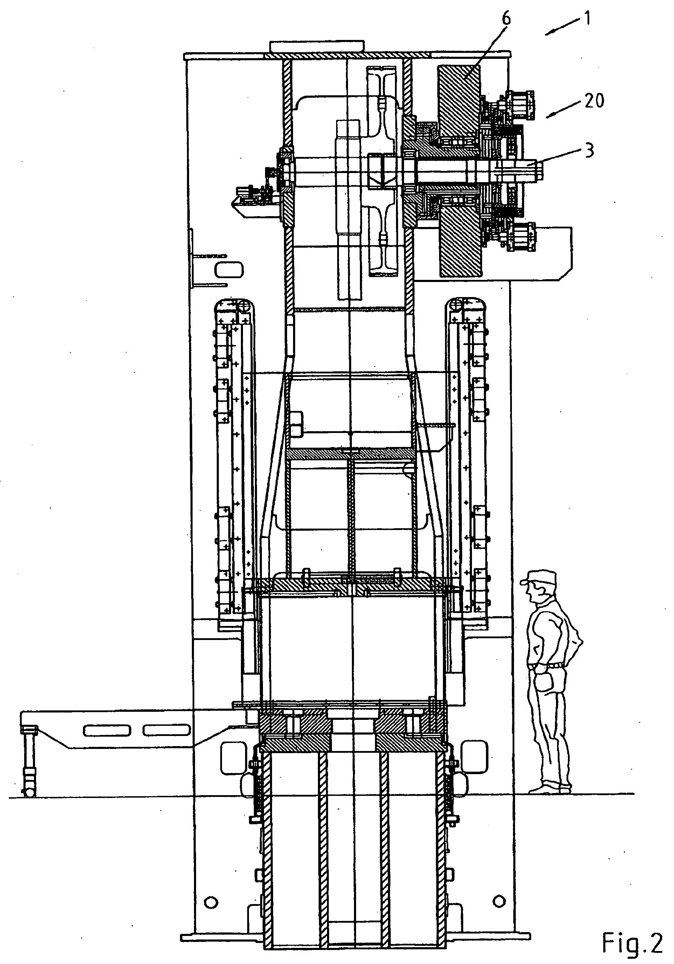

Figur 2 zeigt eine mechanische Umformmaschine 1 dargestellt als Kurbelpresse 2, welche in ihrem oberen Antriebsteil eine erfindungsgemäße Antriebsanordnung aufweist. Die Antriebswelle 3 umgebend ist dabei das Schwungrad 6 angeordnet, welches in gekuppeltem Zustand den Schwungradantrieb für die Umformmaschine darstellt. Eine Antriebsbaugruppe 20, welche an bestehende Befestigungsmittel einer bereits existierenden Maschine angebracht werden kann, ersetzt im Fall einer Nachrüstung einer bestehenden mechanischen Umformmaschine eine vorhandene Kupplungs- und Bremsanordnung.

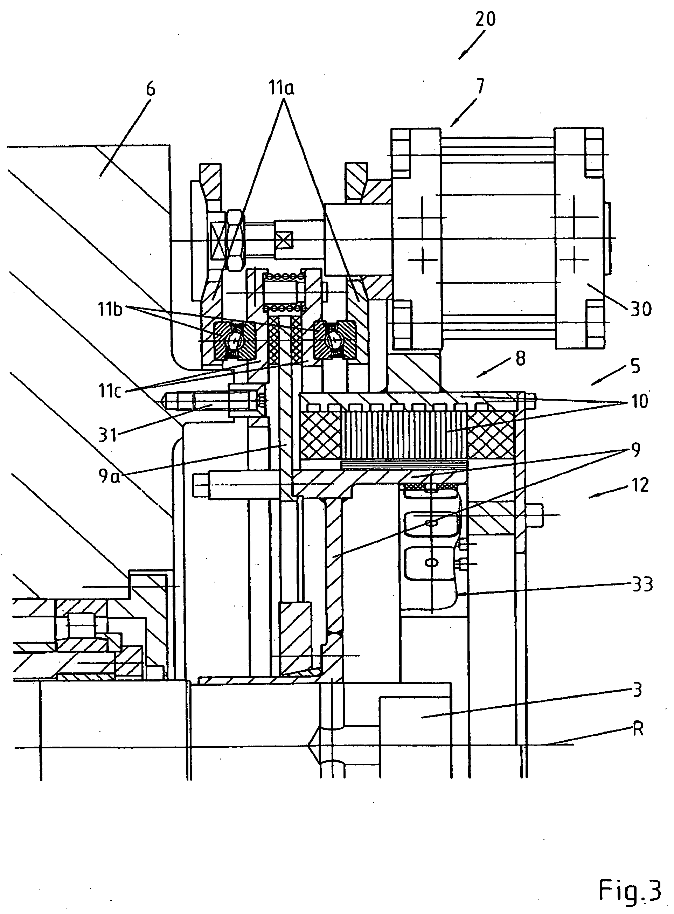

Zum besseren Verständnis ist die Antriebsbaugruppe 20 in Figur 3 vergrößert dargestellt.

Figur 3 zeigt dabei eine entsprechende Schnittdarstellung des oberen Halbraums der Antriebswelle 3, wie sie schematisch in Figur 1 bereits dargestellt war. Der Servomotor 8 umfasst dabei den Rotor 9, der drehfest mit der Antriebswelle 3 verbunden ist, sowie den Stator 10. Die Kupplung 7 mit darin angeordneten Betätigungszylindern 30 kann Friktionsscheibe 9a mit dem Schwungrad 6 verbinden, sodass das Schwungrad über den Rotor 9 die Antriebswelle 3 antreibt. Die Antriebsbaugruppe 20 ist dabei über Befestigungsmittel, beispielsweise über die Befestigung 31, welche beispielsweise bei einer umgerüsteten Maschine bereits vorhanden sind, am Schwungrad 6 bzw. an der Maschine befestigt. Die Trommelbremse 33 ist zwischen der Antriebswelle 3 und dem Rotor 9 angeordnet und übt in ihrer Funktion als Bremsvorrichtung eine Bremskraft auf den Rotor 9 innenliegend aus.

Ergänzend zur Steuerung des Nebenantriebs 5 kann vorgesehen sein, dass über geeignete Mittel ein sensorloser Betrieb des Servomotors ermöglicht ist.

Die Erfindung ist jedoch nicht auf das dargestellte Ausführungsbeispiel beschränkt, sie umfasst vielmehr all diejenigen Ausgestaltungen, welche vom erfindungsgemäßen Gedanken Gebrauch machen.

### Bezugszeichenliste:

- 1: Umformmaschine
- 2: Kurbelpresse
- 3: Antriebswelle
- 3a: erstes Ende
- 3b: zweites Ende
- 4: Schwungradantrieb
- 5: Nebenantrieb
- 6: Schwungrad
- 7: Kupplung
- 8: Servomotor
- 9: Rotor
- 9a: Friktionsscheibe
- 10: Stator
- 11a: Druckscheibe
- 11b: Drucklager
- 11c: Reibscheibe
- 12: Bremsvorrichtung
- 20: Antriebsbaugruppe
- 30: Betätigungszylindern
- 31: Befestigungsmittel
- 33: Trommelbremse

- R: Rotationsachse von 3

## Patentansprüche

1. Mechanische Umformmaschine (1), insbesondere Kurbelpresse, umfassend
- eine Antriebswelle (3),
- einen Schwungradantrieb (4) mit einem Schwungrad (6),
- einen Nebenantrieb (5),
- eine Kupplung (7),
- wobei der Schwungradantrieb (4) die Umformmaschine (1) zumindest zeitweise antreibt,
- wobei das Schwungrad (6) hierzu über die Kupplung (7) mit der Antriebswelle (3) gekuppelt ist,
- wobei der Nebenantrieb (5) als Servomotor (8) ausgebildet ist und die Antriebswelle (3) antreibt und
- wobei ein Rotor (9) des Nebenantriebs (5) drehfest permanent mit der Antriebswelle (3) verbunden ist,
**dadurch gekennzeichnet,**
- **dass** das Schwungrad (6) mittels der Kupplung (7) an den Rotor (9) des Nebenantriebs (5) gekuppelt ist, um über diesen die Antriebswelle (3) anzutreiben.

2. Mechanische Umformmaschine (1), nach Anspruch 1,
**dadurch gekennzeichnet, dass**
- die Antriebswelle (3) ein erstes Ende (3a) und ein zweites Ende (3b) aufweist, wobei der Schwungradantrieb (4) und der Nebenantrieb (5) an demselben Ende (3a; 3b) der Antriebswelle (3) angeordnet sind.

3. Mechanische Umformmaschine nach Anspruch 1 oder 2,
**dadurch gekennzeichnet, dass**
der Rotor (9) des Nebenantriebs (5) die Antriebswelle (3) direkt, ohne Zwischenschaltung einer Kupplung, antreibt und der Rotor (9) dabei in einem Stator (10) innenliegend ausgebildet ist.

4. Mechanische Umformmaschine nach Anspruch 1 oder 2,
**dadurch gekennzeichnet, dass** der Rotor (9) des Nebenantriebs (5) die Antriebswelle (3) direkt, ohne Zwischenschaltung einer Kupplung, antreibt und der Rotor (9) dabei in einem Stator (10) außenliegend ausgebildet ist.

5. Mechanische Umformmaschine nach einem der vorgenanten Ansprüche, **dadurch gekennzeichnet, dass** die Kupplung (7) mindestens einen Betätigungszylinder (30) umfasst, wobei der mindestens eine Betätigungszylinder (30) gegenüber dem Schwungrad (6) still steht.

6. Mechanische Umformmaschine nach einem der vorgenanten Ansprüche, **dadurch gekennzeichnet, dass** eine Bremsvorrichtung (12), insbesondere eine hydraulische Trommelbremse (33) vorgesehen ist, wobei die Bremsvorrichtung (12) radial von der Antriebswelle (3) ausgehend von innen an einen, den Rotor (9) tragenden Rotorträger angreift.

7. Verfahren zur Bereitstellung,einer mechanischen Umformmaschine (1) nach einem der Ansprüche 1 bis 6, wobei
- in einem ersten Verfahrensschritt an einer bestehenden Umformmaschine (1) eine Demontage einer vorhandenen Kupplungs- und Bremsanordnung von einer Antriebswelle (3) unter Erhalt mindestens eines vorhandenen Befestigungsmittels (31) an dem bestehenden Schwungrad (6) der Umformmaschine (1) erfolgt,
- und in einem zweiten Verfahrensschritt eine Befestigung einer Baugruppe bestehend aus Nebenantrieb (5), Kupplung (7) sowie Bremsvorrichtung (12) erfolgt,
**dadurch gekennzeichnet, dass**
- die Baugruppe an mindestens einem bestehenden Befestigungsmittel (31) befestigt, und ein Rotor (9) des Nebenantriebs (5) direkt, drehfest permanent mit der Antriebswelle (3) verbunden wird, so dass das Schwungrad (6) mittels der Kupplung (7) an den Rotor (9) gekuppelt ist.

## Claims

1. A mechanical metal-forming machine (1), in particular a crank press, comprising
- a drive shaft (3),
- a flywheel drive (4) with a flywheel (6),
- an auxiliary drive (5),
- a clutch (7),
- wherein the flywheel drive (4) at least intermittently drives the metal-forming machine (1),
- wherein the flywheel (6) is coupled for this purpose to the drive shaft (3) via the clutch (7),
- wherein the auxiliary drive (5) is designed as a servo motor (8) and drives the drive shaft (3) and
- wherein a rotor (9) of the auxiliary drive (5) is permanently connected to the drive shaft (3) in a rotationally fixed manner,
**characterized in**
- **that** the flywheel (6) is coupled by means of the clutch (7) to the rotor (9) of the auxiliary drive (5), in order to thereby drive the drive shaft (3).

2. A mechanical metal-forming machine (1), according to claim 1, **characterized in that**
- the drive shaft (3) has a first end (3a) and a second end (3b), wherein the flywheel drive (4) and the auxiliary drive (5) are arranged on the same end (3a; 3b) of the drive shaft (3).

3. A mechanical metal-forming machine according to claim 1 or 2, **characterized in that** the rotor (9) of the auxiliary drive (5) drives the drive shaft (3) directly, without interposition of a clutch, and the rotor (9) is thereby formed on the inside in a stator (10).

4. A mechanical metal-forming machine according to claim 1 or 2, **characterized in that** the rotor (9) of the auxiliary drive (5) drives the drive shaft (3) directly, without interposition of a clutch, and the rotor is formed on the outside in a stator (10).

5. A mechanical metal-forming machine according to one of the preceding claims, **characterized in that** the clutch (7) comprises at least one actuating cylinder (30), wherein the at least one actuating cylinder (30) is stationary in respect to the flywheel (6).

6. A mechanical metal-forming machine according to one of the preceding claims, **characterized in that** a brake device (12), in particular, a hydraulic drum brake (33), is provided, wherein the brake device (12) engages a rotor arm bearing the rotor (9) radially from the drive shaft (3) starting from the inside.

7. A method for the provision of a mechanical metal-forming machine (1) according to one of claims 1 to 6, wherein
- in a first process step on an existing mechanical metal-forming machine (1) a disassembly of an existing clutch and brake arrangement of a drive shaft (3) occurs while preserving at least one existing fastener (31) of the existing flywheel (6) of the metal-forming machine (1),
- and in a second process step a fastening of an assembly consisting of auxiliary shaft (5), clutch (7) as well as brake device (12) occurs, **characterized in that**
- the assembly is fastened to at least one existing fastener (31) and a rotor (9) of the auxiliary drive (5) is permanently connected directly with the drive shaft (3) in a rotationally fixed manner, so that the flywheel (6) is coupled to the rotor (9) by means of the clutch (7).

## Revendications

1. Machine de formage (1) mécanique, en particulier presse à bielle, comportant :
- un arbre d'entraînement (3),
- un système d'entraînement à volant (4) comportant un volant (6),
- un système d'entraînement secondaire (5)
- un embrayage (7),
- le système d'entraînement à volant (4) actionnant au moins de temps en temps la machine de formage (1),
- le volant (6) étant couplé à cet effet à l'arbre d'entraînement (3) par l'intermédiaire de l'embrayage (7),
- le système d'entraînement secondaire (5) étant réalisé sous la forme d'un servomoteur (8) et actionnant l'arbre d'entraînement (3), et
- un rotor (9) du système d'entraînement secondaire (5) est relié en permanence de manière solidaire en rotation à l'arbre d'entraînement (3),
**caractérisée en ce que**
- le volant (6) est couplé au rotor (9) du système d'entraînement secondaire (5) au moyen de l'embrayage (7), afin d'actionner l'arbre d'entraînement (3) par l'intermédiaire dudit rotor.

2. Machine de formage (1) mécanique selon la revendication 1, **caractérisée en ce que** l'arbre d'entraînement (3) comporte une première extrémité (3a) et une deuxième extrémité (3b), le système d'entraînement à volant (4) et le système d'entraînement secondaire (5) étant disposés sur la même extrémité (3a ; 3b) de l'arbre d'entraînement (3).

3. Machine de formage mécanique selon la revendication 1 ou 2, **caractérisée en ce que** le rotor (9) du système d'entraînement secondaire (5) actionne l'arbre d'entraînement (3) directement sans le montage intermédiaire d'un embrayage, et le rotor (9) est réalisé, dans ce cas, dans un stator (10) à l'intérieur.

4. Machine de formage mécanique selon la revendication 1 ou 2, **caractérisée en ce que** le rotor (9) du système d'entraînement secondaire (5) actionne l'arbre d'entraînement (3) directement sans le montage intermédiaire d'un embrayage, et le rotor (9) est réalisé, dans ce cas, dans un stator (10) à l'extérieur.

5. Machine de formage mécanique selon l'une quelconque des revendications précédentes, **caractérisée en ce que** l'embrayage (7) comporte au moins un cylindre d'actionnement (30), ledit cylindre d'actionnement (30) étant immobile par rapport au volant (6).

6. Machine de formage mécanique selon l'une quelconque des revendications précédentes, **caractérisée en ce qu'**il est prévu un dispositif de freinage (12), en particulier un frein à tambour (33) hydraulique, le dispositif de freinage (12) entrant en contact, radialement à partir de l'arbre d'entraînement (3) depuis l'intérieur, avec un porte-rotor supportant le rotor (9).

7. Procédé permettant de mettre à disposition une machine de formage (1) mécanique selon l'une quelconque des revendications 1 à 6, dans lequel
- au cours d'une première étape, un système d'embrayage et de freinage existant sur une machine de formage (1) existante est démonté d'un arbre d'entraînement (3) en préservant au moins un moyen de fixation (31) existant sur le volant (6) existant de la machine de formage (1),
- et au cours d'une deuxième étape est effectuée la fixation d'un module constitué du système d'entraînement secondaire (5), de l'embrayage (7), ainsi que du dispositif de freinage (12),
**caractérisé en ce que**
- le module est fixé sur au moins un moyen de fixation (31) existant, et un rotor (9) du système d'entraînement secondaire (5) est relié directement, en permanence de manière solidaire en rotation à l'arbre d'entraînement (3), de telle sorte que le volant (6) est couplé au rotor (9) au moyen de l'embrayage (7).
